# EUROPEAN PATENT APPLICATION

(11) **EP 2 611 202 A1**
(43) Date of publication of application: **03.07.2013**
(21) Application number: 12181459.4
(22) Date of filing: 23.08.2012
(51) Int. Cl.: H04N 21/462, H04N 21/8352, H04N 21/431, H04N 21/81, H04N 21/433, H04N 21/435

(54) **Electronic device and control method of electronic device**

(30) Priority: 27.12.2011 JP 2011285843
(71) Applicant: Kabushiki Kaisha Toshiba, Tokyo 105-8001 (JP)
(72) Inventor: Honsawa, Kunio, Tokyo, 105-8001 (JP); Tsuchiuchi, Takayasu, Tokyo, 105-8001 (JP); Onodera, Mieko, Tokyo, 105-8001 (JP)
(74) Representative: Henkel, Breuer & Partner

(57) **Abstract**

According to one embodiment, electronic device (200) includes: first data acquisition module (220a); second data acquisition module (220b); first storage controller (210b); second storage controller (210c); first display controller (210d); and second display controller (210e). The first data acquisition module acquires first data. The second data acquisition module acquires second data. The first storage controller stores the first data in a first storage region (202a) . The second storage controller stores a first identifier of the first data in a second storage region (202b) in association with a second identifier of the second data. The first display controller displays, on display (201), image based on the second data and second image for receiving an operation to display a video of the first data of the first identifier which is associated in the second storage region with the second identifier. The second display controller displays the video on the display.

## Description

### FIELD

Embodiments described herein relate generally to an electronic device and a control method of the electronic device.

### BACKGROUND

Among devices capable of receiving digital television broadcasting, recording or reproducing videos, there have been conventionally known devices capable of displaying electronic program guide information.

In this kinds of devices, as one example, it is convenient that information related to videos is more easily updated.

Consequently, it is an object of the present embodiment to provide a user friendly electronic device by a display system for video-related information, and to provide a control method of the electronic device.

### SUMMARY

According to an embodiment, an electronic device (200) comprises: a first data acquisition module (220a); a second data acquisition module (220b); a first storage controller (210b); a second storage controller (210c); a first display controller (210d); and a second display controller (210e). The first data acquisition module (220a) is configured to acquire first data, which is to be a source of a video. The second data acquisition module (220b) is configured to acquire second data, which is to be a source of an image corresponding to the video of the first data acquired by the first data acquisition module (220a), from outside of the electronic device (200). The first storage controller (210b) is configured to store the first data acquired by the first data acquisition module (220a) in a first storage region (202a). The second storage controller (210c) is configured to store a first identifier of the first data stored in the first storage region (202a) in a second storage region (202b) in association with a second identifier of the second data. Here, the first identifier is common to another device (300). The first display controller (210d) is configured to display, on a display (201), an image based on the second data acquired by the second data acquisition module (220b) and a second image for receiving an operation to display the video of the first data of the first identifier which is associated in the second storage region (202b) with the second identifier of the second data. The second display controller (210e) is configured to display the video which is based on the first data stored in the first storage region (202a), on the display (201).

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary explanatory diagram of a schematic configuration of a system comprising an electronic device according to an embodiment;
FIG. 2 is an exemplary block diagram of a schematic configuration of the electronic device in the embodiment;
FIG. 3 is an exemplary block diagram of a more detailed schematic configuration of a portion of the electronic device in the embodiment;
FIG. 4 is an exemplary diagram illustrating information stored in the electronic device in the embodiment;
FIG. 5 is an exemplary diagram illustrating a second identifier used for the electronic device in the embodiment;
FIG. 6 is an exemplary flowchart of processing of when a video or data is stored in the electronic device in the embodiment;
FIG. 7 is an exemplary flowchart of processing of when a video stored in the electronic device is displayed or of when displaying based on the data stored in the electronic device is performed, in the embodiment;
FIG. 8 is an exemplary schematic diagram illustrating an image displayed on the electronic device in the embodiment;
FIG. 9 is another exemplary schematic diagram illustrating the image displayed on the electronic device in the embodiment;
FIG. 10 is still another exemplary schematic diagram illustrating the image displayed on the electronic device in the embodiment; and
FIG. 11 is still another exemplary schematic diagram illustrating the image displayed on the electronic device in the embodiment.

### DETAILED DESCRIPTION

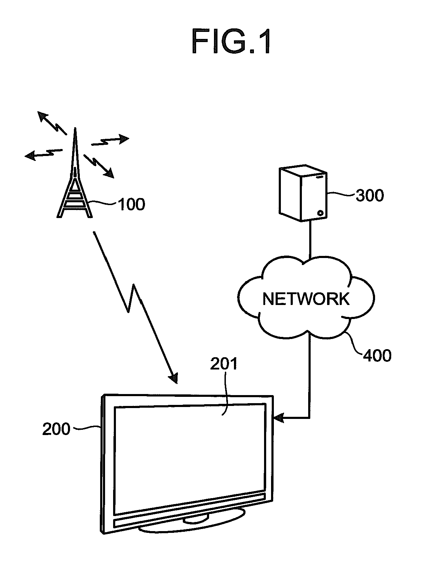

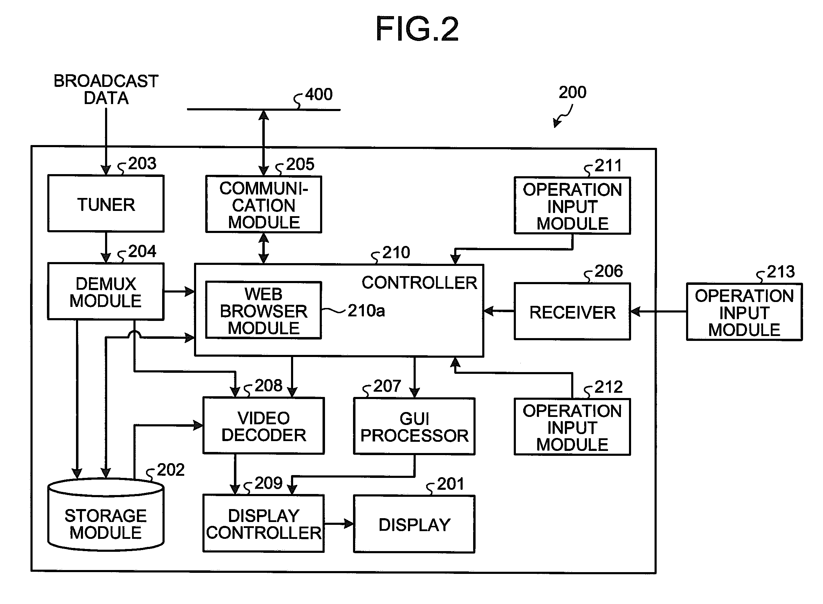

In an embodiment, as one example illustrated in FIG. 1, a system comprises: a broadcasting base station 100; an electronic device 200; and a server device 300. The electronic device 200 and the server device 300 are electrically connected with each other via a wired or wireless network 400 (telecommunication line), and can transmit and receive data to/from each other. The electronic device 200 is, as one example, a television receiver. The electronic device 200 may for example be configured to have no output module such as a display 201 or the like, and may instead be configured as, for example, a recording and reproducing device or an information processing device (e.g., personal computers), which control an output from an output module of a video display device (not illustrated in the drawings) connected thereto. Furthermore, the electronic device 200 may be configured to have no storage module 202 (see FIG. 2), and may instead control writing and reading of data with respect to a so-called external storage or the like connected thereto.

The broadcasting base station 100 transmits, for example, broadcast data (broadcast waves, broadcast signals) of broadcast programs or the like. The broadcast data comprises first data, which is to be the source of a video (a content or a program) of each channel. The first data is, for example, a stream in the form of the moving picture experts group 2 - transport stream (MPEG2-TS).

Furthermore, the broadcast data may comprise second data (display data) corresponding to a channel, a broadcast program, a category in the broadcast program, and/or the like. The second data is data, which is to be the source of an image displayed on the display 201 (output module) or the like of the electronic device 200. The second data is, for example, data in the form of the hypertext markup language (HTML), cascading style sheets (CSS), the JavaScript (registered trademark), the broadcast markup language (BML), or the like. The broadcast data may comprise an identifier (data for acquiring the second data, a uniform resource locator (URL) as one example) of the second data. The second data may comprise various kinds of information (data) with respect to the video (a program, a content, a series).

In addition, the broadcast data may comprise: an identifier (a first identifier) of the first data, which is to be the source of a video (a content or a program); data such as a day (date) of broadcasting a video, a start time, an end time, and a channel; and/or the like. These kinds of data, the first data (video data), the second data (image data), or the like can be transmitted from the server device 300 to the electronic device 200 via the network 400. The first data and the second data can be transmitted from different devices, such as the server device 300, to the electronic device 200. The broadcast data may also comprise various kinds of information (data) with respect to a video (a program, a content, or a series).

In the present embodiment, as one example illustrated in FIG. 2, the electronic device 200 comprises: a display 201; a storage module 202; a tuner 203; a demultiplexer module (Demux module) 204; a communication module 205; a receiver 206; a graphical user interface (GUI) processor 207; a video decoder 208; a display processing module 209; a controller 210; and operation input modules 211, 212, and 213. The display 201 is, as one example, a liquid crystal display (LCD) or the like. The storage module 202 is, as one example, a hard disk drive (HDD) or the like.

The tuner 203 is a receiver of broadcast data (broadcast signals or broadcast waves). The demultiplexer module 204 is a separation module for separating various kinds of data from the broadcast data received. The first data (video data) separated from the broadcast data is transmitted to the video decoder 208. Furthermore, the first data, the second data (image data), and the like that are separated from the broadcast data are transmitted to and stored in the storage module 202. The video decoder 208 decodes the first data received from the demultiplexer module 204, the first data received from the storage module 202, or the first data received from the communication module 205. The first data decoded is transmitted to the display processor 209. The identifier of the second data (the second data corresponding to the first data) separated from the broadcast data is transmitted to the controller 210. Therefore, the controller 210 can acquire the second data corresponding to the identifier of the second data from the server device 300 via the communication module 205. The communication module 205 transmits and receives data to/from another device (the server device 300, for example).

A web browser module 210a comprises a JavaScript (registered trademark) processor, an HTML processor, a video/audio element processor, an application program interface (API) processor, a CSS processor, and the like (all of them are not illustrated in the drawings). The web browser module 210a transmits data obtained by analyzing or processing data acquired to the GUI processor 207 or the like. The GUI processor 207 generates an image for a user interface in response to an instruction of the controller 210. The display processor 209 combines data received from the video decoder 208 and data received from the GUI processor 207. The data combined in the display processor 209 is displayed on the display 201. The controller 210 receives control signals in a wireless manner (by means of infrared rays or the like, as one example) from the operation input module 213 such as a remote controller via the receiver 206. Furthermore, the controller 210 receives control signals from the operation input module 211 (a touch sensor or a switch, for example) or the external operation input module 212 (a mouse or a keyboard, for example). The controller 210 can perform various kinds of arithmetic processing in response to the control signals input from these operation input modules 211 to 213, or control individual modules. The controller 210 (comprising the web browser module 210a) is, as one example, realized by the operation of a computer program (an application or the like) that is stored in a storage (an HDD, for example) of a computer, and read out to an arithmetic-processing module (a central processing unit (CPU), for example) of the computer to execute. The controller 210 can perform processing in accordance with computer programs (applications, scripts, or the like) comprised in the broadcast data or the second data.

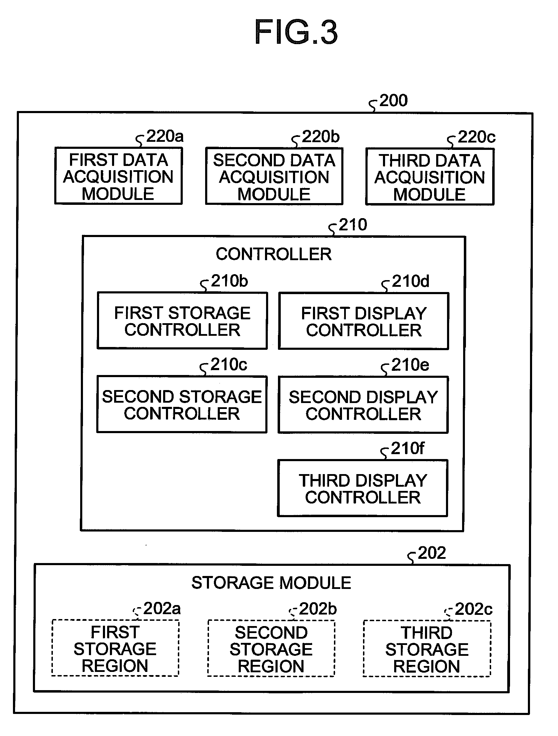

Furthermore, in the present embodiments, as one example illustrated in FIG. 3, the electronic device 200 comprises: a first data acquisition module 220a; a second data acquisition module 220b; and a third data acquisition module 220c. The controller 210 comprises: a first storage controller 210b; a second storage controller 210c; a first display controller 210d; a second display controller 210e; and a third display controller 210f. The storage module 202 comprises: a first storage region 202a; a second storage region 202b; and a third storage region 202c.

The first data acquisition module 220a acquires the first data (video data). The first storage controller 210b stores the first data in the first storage region 202a. Furthermore, when the first data acquisition module 220a acquires the identifier (the first identifier) of the first data, the second storage controller 210c stores the identifier of the first data in the second storage region 202b.

The second data acquisition module 220b acquires the second data (image data). The first display controller 210d transmits the second data to the GUI processor 207 (see FIG. 2). Furthermore, when the second data acquisition module 220b acquires the identifier (a second identifier) of the second data, the second storage controller 210c stores the identifier of the second data in the second storage region 202b.

The third data acquisition module 220c acquires third data (program information data and program table data, for example). If the data acquired by the third data acquisition module 220c contains data (data of number of videos) indicating the total number of series of videos (contents or programs) and data (data indicating a number of times the data has been broadcasted, or data indicating a serial number of the story) of a number of times of videos (contents or programs), the third display controller 210f generates images based on those pieces of data. The third data can also contain various kinds of information (data) with respect to the videos (programs, contents, series).

The first data acquisition module 220a, the second data acquisition module 220b, and the third data acquisition module 220c are, as one example in the present embodiment, constituted of the tuner 203, the demultiplexer module 204, and the communication module 205. If the broadcast data comprises: the first data (video data); the second data (image data) corresponding to the identifier of the first data, together with the identifier of the first data; or the identifier of the second data, the second storage controller 210c can store the identifier of the first data in association with the identifier of the second data in the second storage region 202b of the storage module 202. Furthermore, if the second data also comprises the identifier of the first data, the second storage controller 210c can store the identifier of the first data in association with the identifier of the second data in the second storage region 202b of the storage module 202. If the third data also comprises the identifier of the first data and the identifier of the second data, the second storage controller 210c can store the identifier of the first data in association with the identifier of the second data in the second storage region 202b of the storage module 202. The second data is data to be the source of an image associated with a video of the first data, and association (association relationship) between the first data and the second data is preliminarily determined on the distributer side of the data. Therefore, the second storage controller 210c acquires identifiers associated with each other or data indicating correspondence between the identifiers from broadcast data in broadcasting or communication data acquired through the network 400, thus storing the identifiers of the first data and the second data in the storage module 202 in a manner such that the identifiers are associated with each other.

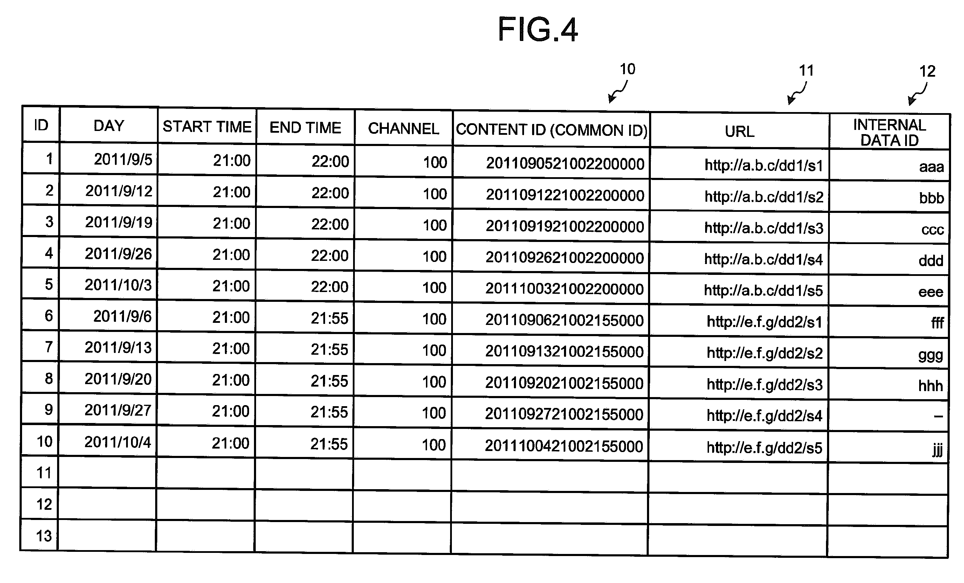

Furthermore, in the present embodiment, as one example illustrated in FIG. 4, an identifier 10 (the first identifier: in the present embodiment, a content ID (a common ID) as one example) of the first data, an identifier 11 (the second identifier: in the present embodiment, a URL as one example) of the second data, and an identifier 12 (a third identifier: in the present embodiment, an internal data ID as one example) different from the identifier 10 of the first data are stored in a manner such that these identifiers are associated with each other. These kinds of data can be, as one example, stored in the form of a table. However, the data is not limited thereto, and may be stored in any manner as long as correspondences among the identifiers are apparent. In addition, in the present embodiment, as one example illustrated in FIG. 4, various kinds of data such as a day (date), a start time, an end time, and a channel are stored with the identifiers 10 to 12 in such a state that the mutual associations of the data are apparent.

In the present embodiment, as one example, the identifier 10 of the first data is unique to the video (the content, the program) of the first data, and set as common data for all devices including other electronic devices 200. Consequently, after the identifiers 10, 11, 12, and the like are stored in the storage module 202, a computer program (an application, a script, or the like) comprised in the second data acquired from the outside of the own device can cause the controller 210 to more accurately or easily specify the identifier 10, that is, the first data of the video, to perform arithmetic processing using the identifier 10. Accordingly, as one example, the arithmetic processing can be performed more quickly in the controller 210.

Furthermore, in the present embodiment, as one example, the identifier 10 of the first data is constituted based on the attribute information of the first data or the video (the content or the program) of the first data, in accordance with a predetermined rule (certain algorithm). To be more specific, in the present embodiment, the identifier 10 of the first data is constituted by contiguously arranging the data as the attribute information, i.e., by arranging a day (date), a start time, an end time, and a channel in a predetermined order and form. Accordingly, even when in a situation where the identifier 10 of the first data cannot be acquired, the controller 210 can acquire the identifier 10 of the first data as a combination of the attribute information from which a unique value of the video (the content or the program) can be acquired.

In the present embodiment, as one example, the storage module 202 stores therein the identifier 12 (the third identifier) assigned by the electronic device 200 (the own device) in association with the identifier 10 of the first data which is common to other electronic devices 200. Accordingly, the controller 210 can more efficiently perform, as one example, arithmetic processing based on the identifier 12 whose arithmetic processing is easily performed rather than that of the identifier 10. The controller 210 can determine whether the first data (video data) is stored depending on the presence or absence of the identifier 12 corresponding to the identifier 10. In this case, only when the first data is stored in the storage module 202, the second storage controller 210c (the controller 210) may acquire the identifier 12, and store the identifier 12 in association with the identifier 10.

As for the data illustrated in FIG. 4, data to be listed is added or updated at the timing when a video (content or program) recording is scheduled or when the video recording is started, for example. However, it is possible to store the data illustrated in FIG. 4 even when the video recording is not scheduled.

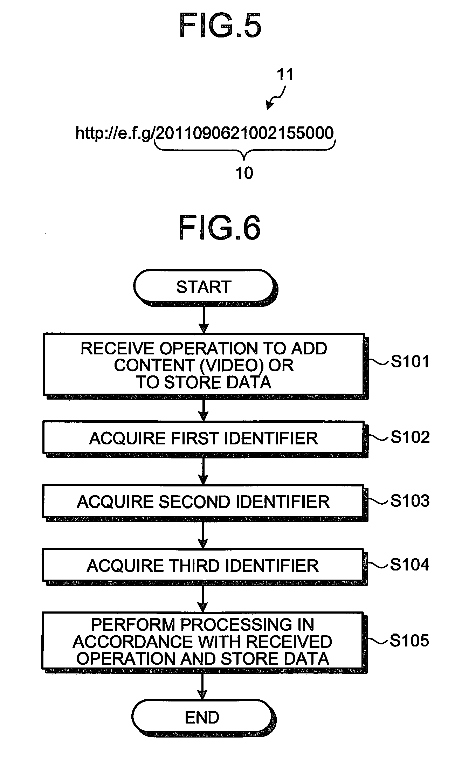

As illustrated in FIG. 5, the identifier 11 can contain the identifier 10. In this case, even when the controller 210 fails to acquire the identifier 11 of the second data, it becomes easier to acquire the identifier 11 of the second data from the identifier 10 of the first data.

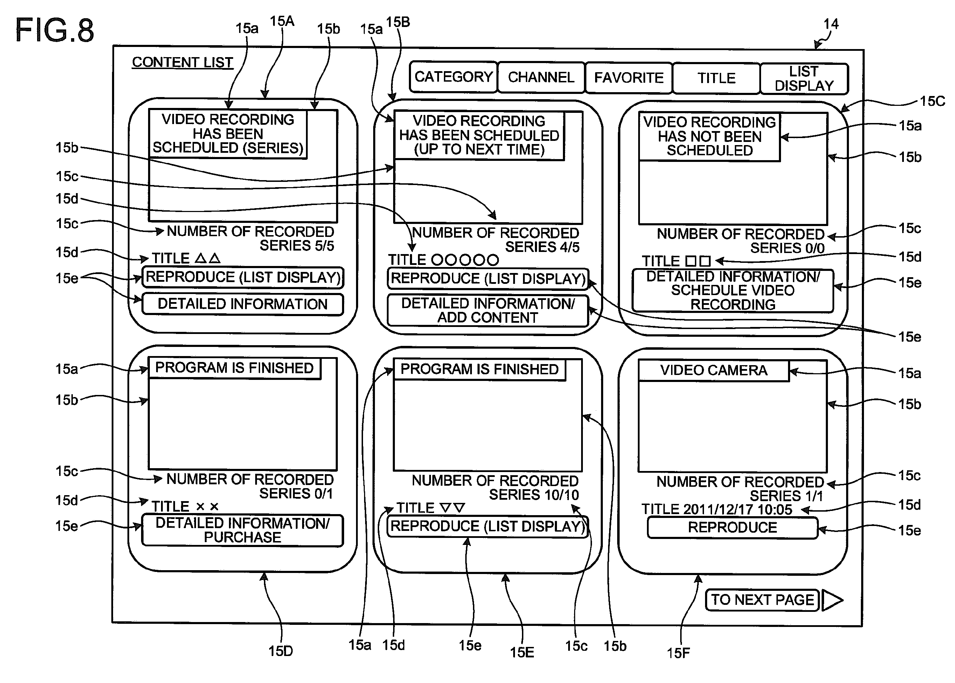

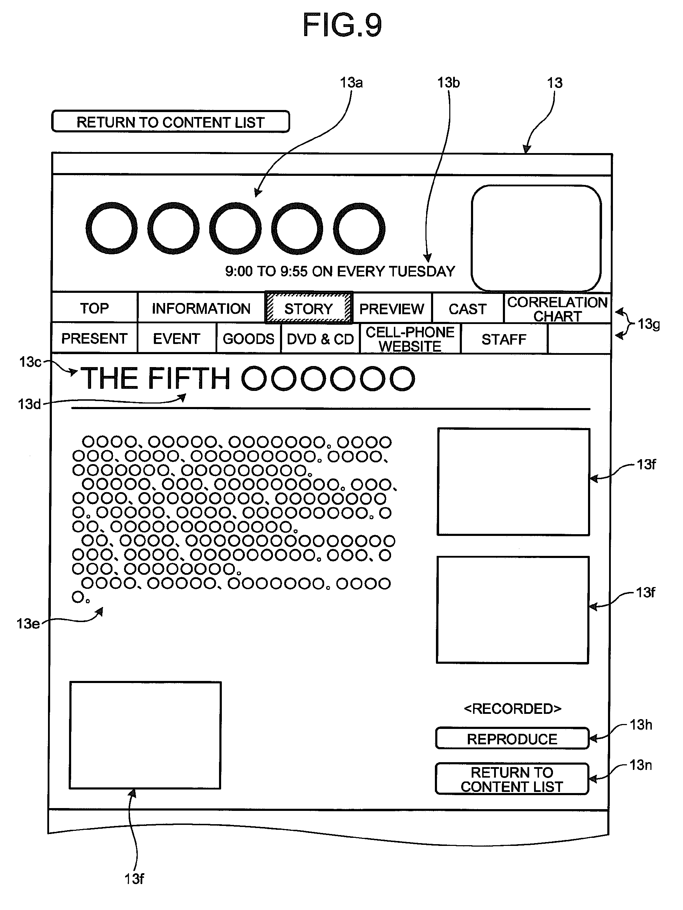

Furthermore, the first display controller 210d illustrated in FIG. 3 can generate data of an image to be displayed on the display 201 from: the second data acquired from the second data acquisition module 220b; the third data acquired from the third data acquisition module 220c; data of the identifiers 10 and 11 stored in the second storage region 202b; and/or the like. An image displayed by the first display controller 210d is, as one example, an image 13 in FIGS. 9 to 11. The second display controller 210e can generate the data of a video to be displayed on the display 201 from the first data stored in the first storage region 202a. The third display controller 210f can generate the data of an image to be displayed on the display 201 from: the third data (program table data and the like) acquired by the third data acquisition module 220c; the second data acquired from the second data acquisition module 220b; the data of the identifiers 10 and 11 stored in the second storage region 202b; data stored in the third storage region 202c; and/or the like. An image displayed by the third display controller 210f is, as one example, such an image 14 as illustrated in FIG. 8.

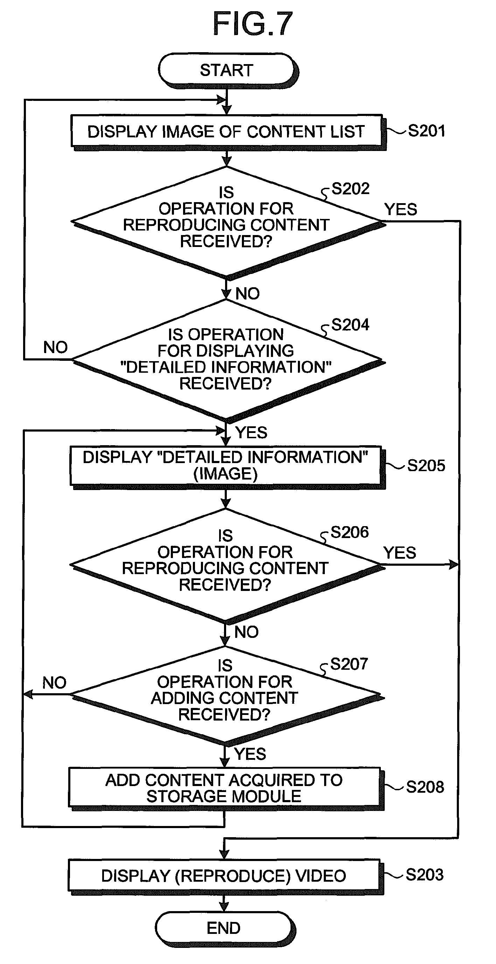

Next, one example of processing in the electronic device 200 is explained with FIGS. 6 and 7. In FIG. 6, the processing of each module of the controller 210 of when a video (content or program) is stored (recorded), of when the video storing (video recording) is scheduled, and of when information with respect to a video is stored, for example, is illustrated.

First, when it is instructed for example to store (record) video, to schedule recording (video recording), to store information (the identifiers 10 and 11, for example) related to the video, and/or the like, in accordance with the operation of the operation input modules 211 to 213 (S101), the controller 210 acquires the identifier 10 of the first data (S102), acquires the identifier 11 of the second data (S103), and acquires the other identifier 12 different from the identifier 10 of the first data (S104).

Next, the controller 210 performs processing corresponding to the operation input of the operation input modules 211 to 213. For example, when the storing (recording) of a video (a content or a program) is instructed by the operation input of the operation input modules 211 to 213, the controller 210 functions as the first storage controller 210b, and stores the first data in the first storage region 202a. Further, the controller 210 functions as the second storage controller 210c, and stores the identifiers 10 to 12 in the second storage region 202b when the identifiers 10 to 12 corresponding to the first data are not stored in the second storage region 202b. That is, the data illustrated in FIG. 4 can function as a list (a table) of recorded data of videos (contents or programs) (S105).

Furthermore, when the video storing (content recording or program recording) is scheduled by the operation input of the operation input modules 211 to 213, the controller 210 performs processing associated with the schedule. To be more specific, the controller 210 functions as the second storage controller 210c, and stores the identifiers 10 and 11 with data such as a day (date), a start time, an end time, and a channel in the second storage region 202b in such a manner that the association between the identifiers and the data is apparent. The first storage controller 210b can store the first data in the storage module 202 at a subsequent timing (a time specified by the day, the start time, and the end time) based on the data illustrated in FIG. 4. That is, the data illustrated in FIG. 4 can also function as the list (the table) of data for scheduled recording of videos (contents or programs) (S105).

When storing information related to the video (content or program) is instructed by the operation input of the operation input modules 211 to 213, the controller 210 functions as the second storage controller 210c, and stores the identifiers 10 and 11 with data such as a day (date), a start time, an end time, and a channel in the second storage region 202b in a manner such that the association between the identifiers and the data is apparent (S105). Consequently, as one example, the second display controller 210e can display an image (images illustrated in FIGS. 9 to 11, for example) indicating the contents or the like of the video (the content or the program) based on the second data in response to the operation input of the operation input modules 211 to 213 at a subsequent timing. That is, the data in FIG. 4 also functions as the list (the table) of favorite data of videos (contents or programs) (S105).

In FIG. 7, the processing of each module of the controller 210 of when a video stored is displayed or a display based on data stored is performed, for example, is illustrated. First, the controller 210 functions as the third display controller 210f, and displays, for example, an image 14 as illustrated in FIG. 8 (a content list) by using the identifiers 10 to 12 stored in the second storage region 202b, data stored in advance in the third storage region 202c, or the like (S201). The image 14 comprises images 15A to 15F of the respective videos (contents, programs, or series). The respective images 15A to 15F each comprise images (including characters) of status information 15a, a representative image 15b, the number of recorded series 15c, a title 15d, an operation section 15e (buttons, operation areas), and the like.

The status information 15a is information (an image) indicating a state with respect to a record (video recording) or a display (reproducing) of each video (a content, a program, or a series). Examples of the status information 15a include "VIDEO RECORDING HAS BEEN SCHEDULED (SERIES)", "VIDEO RECORDING HAS BEEN SCHEDULED (UP TO NEXT TIME)", "VIDEO RECORDING HAS NOT BEEN SCHEDULED ", "PROGRAM IS FINISHED", and "VIDEO CAMERA". The number of recorded series 15c indicates (the number of recorded series) / (the total number of series). Users can grasp information such as the availability of video recording, the number of recorded videos, or the number of videos not recorded with respect to each video (a content, a program, or a series) from the status information 15a or the number of series recorded 15c.

The storage module 202 (the first storage region 202a) stores the first data therein. As for a reproducible video (content, program, or series), the images 15A, 15B, 15E, and 15F each comprises an image of the operation section 15e represented as "REPRODUCE (LIST DISPLAY)", "REPRODUCE ", or the like. The third display controller 210f refers to (retrieves) identifiers 12 in the second storage region 202b. When there exists one identifier 12 with respect to the video (the content, the program, the series) in the second storage region 202b, the third display controller 210f can display the operation section 15e of "REPRODUCE ". When there exists two or more identifiers 12 in the second storage region 202b, the third display controller 210f can display the operation section 15e of "REPRODUCE (LIST DISPLAY) ". The third display controller 210f can acquire the data of the identifiers of the series from the broadcast data, the second data or the third data corresponding to the first data, or the like.

As for videos (contents, programs, or series) whose numbers stored (recorded) in the storage module 202 are less than the numbers of series recorded or videos (contents, programs, or series) for which recording reservation has not yet been set, the images 15A, 15B, 15C, and 15D comprise an image of the operation section 15e represented as "DETAILED INFORMATION", "DETAILED INFORMATION/ADD CONTENT ", "DETAILED INFORMATION/SCHEDULE VIDEO RECORDING", "DETAILED INFORMATION/PURCHASE", or the like. The third display controller 210f, for example, refers to (retrieves) the broadcast data, the second data or the third data (program table data and the like) corresponding to the first data, the identifiers 12 in the second storage region 202b, or the like. The third display controller 210f can display the operation section 15e in accordance with the state of the video (the content, the program, or the series). If the operation section 15e comprising "DETAILED INFORMATION" is selected on the display screen of the display 201 by the operation of the operation input modules 211 to 213, the second display controller 210e displays, for example, such an image 13 as illustrated in FIGS. 9 to 11 on the display 201. Furthermore, the "(ADD CONTENT)" is displayed if a video (a content, a program, or a series) recorded or purchased can be added to the storage module 202. The "(SCHEDULE VIDEO RECORDING)" is displayed if the video recording (recording of content, program, or series) can be scheduled. The "(PURCHASE)" is displayed if the video (content, program, or series) is available for purchase.

At S201 in FIG. 7, when the image 14 as illustrated in FIG. 8 is displayed on the display screen of the display 201, and the operation section 15e represented as "REPRODUCE" is selected on the display screen of the display 201 by the operation of the operation input modules 211 to 213 (Yes at S202), the controller 210 functions as the second display controller 210e and displays (reproduces) the video corresponding to the operation section 15e selected.

Furthermore, at S201 in FIG. 7, if the image 14 as illustrated in FIG. 8 is displayed on the display screen, and the operation section 15e represented as "DETAILED INFORMATION" is selected instead of the operation section 15e represented as "REPRODUCE" by the operation of the operation input modules 211 to 213 (No at S202, and Yes at S204), the controller 210 functions as the first display controller 210d, and displays the image 13 as illustrated in FIGS. 9 to 11 (S205). In the case of No at S204, processing returns to S201.

The image 13 illustrated in FIGS. 9 to 11 comprises information (characters, pictures, and the like) related to the video (content, program, or series). As one example, the image 13 comprises characters of items such as a title 13a of the video, a broadcast time 13b, the number 13c of the part of the video, a title 13d of the part of the video, and a story 13e (outline), and pictures 13f or the like. The image 13 is displayed based on the second data. Furthermore, the image 13 also comprises an operation section 13g (a button or an operation region) for displaying other images related to the video (the content, the program, or the series) other than the story. When the operation section 13g displayed on the display screen of the display 201 is selected by the operation of the operation input modules 211 to 213, the controller 210 displays the image 13 corresponding to the operation section 13g selected on the display 201.

Furthermore, the image 13 illustrated in FIG. 9 comprises an operation section 13h (a button, an operation region, or an image) represented as "REPRODUCE". When the operation section 13h displayed on the display screen of the display 201 is selected by the operation of the operation input modules 211 to 213 (Yes at S206), the controller 210 functions as the second display controller 210e, and displays (reproduces) a video corresponding to the operation section 13h (S203). The image of the operation section 13h is one example of a second image. The first display controller 210d displays the operation section 13h if the first data corresponding to the operation section 13h exists in the first storage region 202a.

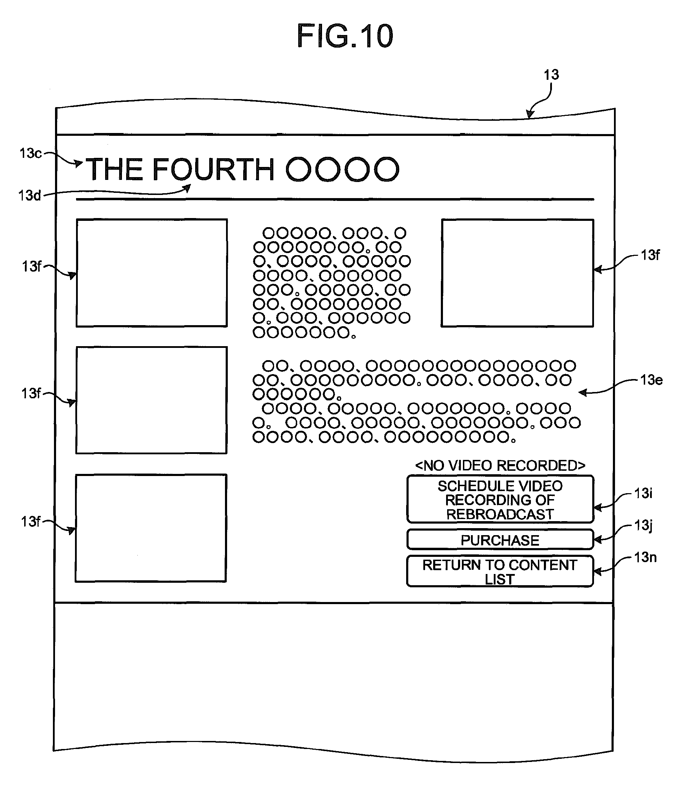

The image 13 illustrated in FIG. 10 comprises an operation section 13i (a button, an operation region, or an image) represented as "SCHEDULE VIDEO RECORDING OF REBROADCAST". If the operation section 13i displayed on the display screen of the display 201 is selected by the operation of the operation input modules 211 to 213 (No at S206, and Yes at S207), the controller 210 functions as the second storage controller 210c. The controller 210 stores, as illustrated in FIG. 4, the identifiers 10 to 12 with the data such as a day (a date), a start time, an end time, and a channel in the second storage region 202b in a manner such that the association between the identifiers and the data is apparent. The first storage controller 210b can store the first data in the storage module 202 at a subsequent timing (a time specified by the day, the start time, and the end time) based on the data illustrated in FIG. 4 (S208). The data stored in the second storage region 202b by this processing is comprised, for example, in the broadcast data, the second data, the third data, or the like. The image of the operation section 13i is one example of a third image. Furthermore, the first display controller 210d displays the operation section 13i when the first data corresponding to the operation section 13i does not exist in the first storage region 202a, and also when it is determined from broadcast data, the second data, the third data, or the like, that the video (content or program) which does not exist in the first storage region 202a is to be rebroadcasted.

Furthermore, the image 13 illustrated in FIG. 10 comprises an operation section 13j (a button, an operation region, or an image) represented as "PURCHASE". If the operation section 13j displayed on the display screen of the display 201 is selected by the operation of the operation input modules 211 to 213 (No at S206, and Yes at S207), the controller 210 switches the image 13 to an image (not illustrated in the drawings) on which purchase processing can be performed. When a video (content or program) is purchased by the operation of the operation input modules 211 to 213, the controller 210 functions as the first storage controller 210b, and stores the video (the content or the program) purchased in the second storage region 202b (S208). The image of the operation section 13j is one example of the third image. Furthermore, the first display controller 210d displays the operation section 13j when the first data corresponding to the operation section 13j does not exist in the first storage region 202a, and also when it is determined from broadcast data, the second data, the third data, or the like, that the video broadcasting (content or program broadcasting) has been finished and its video data is on sale.

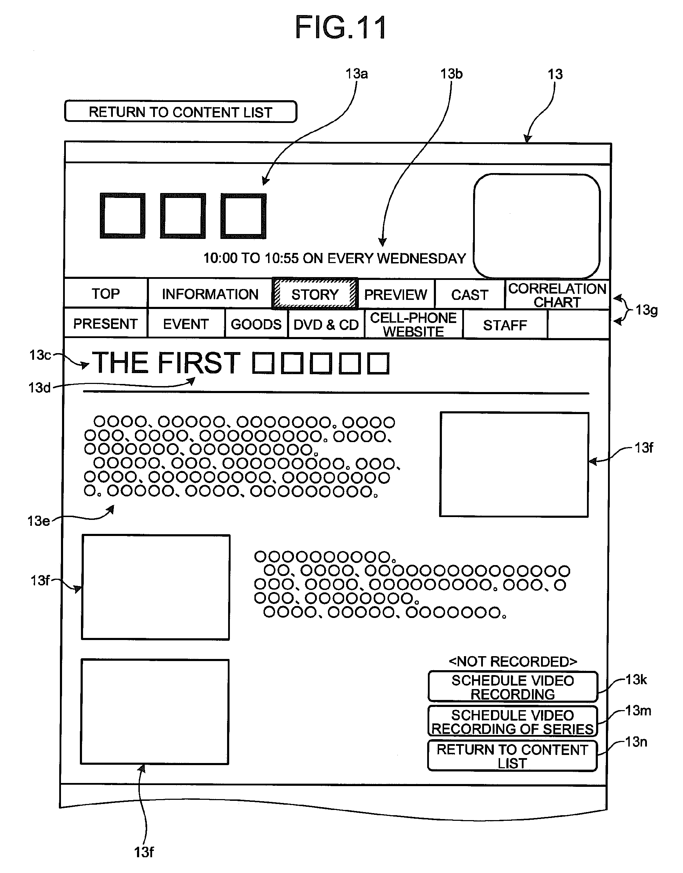

The image 13 illustrated in FIG. 11 comprises an operation section 13k (a button, an operation region, or an image) represented as "SCHEDULE VIDEO RECORDING " and an operation section 13m (a button, an operation region, or an image) represented as "SCHEDULE VIDEO RECORDING OF SERIES". When the operation sections 13k and 13m displayed on the display screen of the display 201 are selected by the operation of the operation input modules 211 to 213 (No at S206, and Yes at S207), the controller 210 functions as the second storage controller 210c. The controller 210 stores, as illustrated in FIG. 4, the identifiers 10 to 12 with the data such as a day (a date), a start time, an end time, and a channel in the second storage region 202b in such a manner that the association between the identifiers and the data is apparent. The first storage controller 210b can store the first data in the storage module 202 at a subsequent timing (a time specified by the day, the start time, and the end time) based on the data illustrated in FIG. 4 (S208). The data stored in the second storage region 202b by this processing is comprised, for example, in the broadcast data, the second data, the third data, or the like. When in the case of No at S207 and when S208 is finished, the processing returns to S205. The images of the operation sections 13k and 13m each are one example of the third image. Furthermore, the first display controller 210d displays the operation sections 13k and 13m when the first data corresponding to the operation sections 13k and 13m does not exist in the first storage region 202a, and also when it is determined from broadcast data, the second data, the third data, or the like, that the video (the content or the program) has not yet been broadcasted.

The image 13 illustrated in FIGS. 9 to 11 comprises an operation section 13n (a button, an operation region, or an image) represented as "RETURN TO CONTENT LIST". When the operation section 13n displayed on the display screen of the display 201 is selected by the operation of the operation input modules 211 to 213, the controller 210 functions as the third display controller 210f. The controller 210 displays, for example, the image 14 (the content list) as illustrated in FIG. 8 on the display 201. That is, the processing returns to S201.

As explained above, in the present embodiment, as one example, the second storage controller 210c stores the identifier 10 of the first data, which is stored in the first storage region 202a, in the second storage region 202b in association with the identifier 11 of the second data, where the identifier 10 is common to the other devices or unique to a video (a content or a program). The first display controller 210d displays, on the display 201, the image 13 based on the second data acquired in the second data acquisition module 220b and the image (the second image) of the operation section 13h for receiving the operation to display the video of the first data of the identifier 10 which is associated in the second storage region 202b with the identifier 11 of the second data. That is, according to the present embodiment, as one example, since the image 13 based on the second data acquired from the outside of the own device is displayed on the display 201, information with respect to a video can easily be changed (updated). Further, the image of the operation section 13h for receiving an instruction to display the video based on the correspondence between the identifiers 10 and 11 is displayed with the image 13 on the display 201. Accordingly, as one example, it is advantageous for users in that information related to videos can be easily acquired and the electronic device 200 can be operated depending on the information or the condition of storing (recording) the first data in the storage module 202. Furthermore, as one example, it is also advantageous for service providers in that the information related to videos can easily be changed or updated.

Furthermore, in the present embodiment, as one example, when the first data of the identifier 10 corresponding to the identifier 11 of the second data does not exist in the first storage region 202a, the first display controller 210d displays on the display 201 the image 13 based on the second data and the image (the third image) of the operation sections 13i, 13j, 13k, and 13m for receiving the operation to acquire the first data corresponding to the identifier 10 from the outside of the own device. Accordingly, as one example, it is advantageous for users in that the electronic device 200 can be operated depending on information related to a video or the condition of storing (recording) the first data in the storage module 202.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electronic device (200) comprising:
a first data acquisition module (220a) configured to acquire first data, which is to be a source of a video;
a second data acquisition module (220b) configured to acquire second data, which is to be a source of an image corresponding to the video of the first data acquired by the first data acquisition module (220a), from outside of the electronic device (200);
a first storage controller (210b) configured to store the first data acquired by the first data acquisition module (220a) in a first storage region (202a);
a second storage controller (210c) configured to store a first identifier of the first data stored in the first storage region (202a) in a second storage region (202b) in association with a second identifier of the second data, the first identifier being common to another device (300);
a first display controller (210d) configured to display, on a display (201), an image based on the second data acquired by the second data acquisition module (220b) and a second image for receiving an operation to display the video of the first data of the first identifier which is associated in the second storage region (202b) with the second identifier of the second data; and
a second display controller (210e) configured to display the video which is based on the first data stored in the first storage region (202a), on the display (201).

2. The electronic device (200) of Claim 1, wherein the first display controller (210d) displays, if the first data of the first identifier corresponding to the second identifier of the second data does not exist in the first storage region (202a), the image based on the second data and a third image for receiving an operation to acquire the first data corresponding to the first identifier from the outside of the electronic device (200), on the display (201).

3. The electronic device (200) of Claim 1 or 2, wherein
the first identifier is stored in the second storage region (202b) in association with a third identifier different from the first identifier, and
the first data is stored in the first storage region (202a) in association with the third identifier.

4. The electronic device (200) of any one of Claims 1 to 3, wherein the first identifier comprises information indicating a broadcast time of the video and information indicating a channel for broadcasting the video.

5. The electronic device (200) of any one of Claims 1 to 4, wherein the second identifier comprises the first identifier.

6. The electronic device (200) of any one of Claims 1 to 5, further comprising the display (201).

7. A control method of an electronic device (200) comprising:
acquiring, by the electronic device (200), first data, which is to be a source of a video;
acquiring, by the electronic device (200), second data, which is to be a source of an image corresponding to the video of the first data acquired, from the outside of the electronic device (200);
storing, by the electronic device (200), the first data acquired in a first storage region (202a);
storing, by the electronic device (200), a first identifier of the first data stored in the first storage region (202a) in a second storage region (202b) in association with a second identifier of the second data, the first identifier being common to another device (300);
displaying, on a display (201) by the electronic device (200), an image based on the second data acquired and a second image for receiving an operation to display the video of the first data of the first identifier which is associated in the second storage region (202b) with the second identifier of the second data; and
displaying, by the electronic device (200), the video which is based on the first data stored in the first storage region (202a), on the display (201).
